# EUROPEAN PATENT APPLICATION

(11) **EP 4 582 256 A1**
(43) Date of publication of application: **09.07.2025**
(21) Application number: 23860000.1
(22) Date of filing: 09.08.2023
(51) Int. Cl.: B33Y 10/00, B33Y 30/00, B33Y 50/02, B29C 64/153, B29C 64/245, B29C 64/295, B29C 64/393, B22F 10/28, B22F 10/362, B22F 12/90

(54) **THREE-DIMENSIONAL SHAPING DEVICE AND PRE-HEATING DEVICE**

(30) Priority: 31.08.2022 JP 2022137716
(71) Applicant: IHI Corporation, Tokyo 135-8710 (JP)
(72) Inventor: SHIONUMA, Kenta, Tokyo 135-8710 (JP)
(74) Representative: MERH-IP Matias Erny Reichl Hoffmann Patentanwälte PartG mbB
(86) International application number: PCT/JP2023/029156
(87) International publication number: WO 2024/048234

(57) **Abstract**

A shaping device includes a table, a forming unit that forms a shaped object, and a controller that controls an operation of the forming unit. The table rotates in a rotation direction. The forming unit has a feeder configured to form a powder bed, a heater capable of pre-heating each of a plurality of regions in the powder bed at different temperatures, and a beam source configured to irradiate the pre-heated powder bed with an energy beam. The controller includes a region division unit configured to divide the powder bed into a plurality of small regions, a region setting unit configured to set a small region including an irradiation scheduled portion to be irradiated with the energy beam by the beam source as a first region and set at least one small region among other small regions that have not been set as the first region as a second region, and a heater control unit configured to control an output of the heater such that the first region and the second region are pre-heated at mutually different temperatures.

## Description

### Technical Field

The present disclosure relates to a three-dimensional shaping device and a pre-heating device.

### Background Art

Patent Literature 1 discloses a technique related to a three-dimensional shaping device. The three-dimensional shaping device disclosed in Patent Literature 1 supplies a powder material onto a table, pre-heats the powder material supplied onto the table, and irradiates the pre-heated powder material with an energy beam to shape a three-dimensional shaped object.

### Citation List

### Patent Literature

Patent Literature 1: Japanese Unexamined Patent Publication No. 2020-84218

### Summary of Invention

### Technical Problem

In the three-dimensional shaping device as described above, the entire powder bed formed of the powder material is pre-heated at a uniform temperature. In this case, for example, since a pre-sintered body is generated by the pre-heating also in a region that does not configure the shaped object in the powder bed, it takes time to remove the pre-sintered body, and it may be difficult to smoothly continue shaping processing of a continuous shaped object.

The present disclosure describes a three-dimensional shaping device and a pre-heating device capable of efficiently performing shaping processing.

### Solution to Problem

A three-dimensional shaping device according to one aspect of the present disclosure includes: a table having a main surface onto which a powder material is supplied; a forming unit disposed to face the main surface and configured to form a shaped object by laminating a plurality of shaped portions formed of the powder material; and a controller configured to control an operation of the forming unit. The table rotates relative to the forming unit in a predetermined rotation direction about a rotation axis. The forming unit has a supply unit configured to supply the powder material onto the main surface to form a powder bed, a pre-heating unit disposed downstream of the supply unit in the rotation direction and capable of pre-heating each of a plurality of regions in the powder bed at different temperatures, and an irradiation unit disposed downstream of the pre-heating unit in the rotation direction and configured to irradiate at least a part of the pre-heated powder bed with an energy beam. The controller includes a region division unit configured to divide the powder bed into a plurality of small regions, a region setting unit configured to set a small region including an irradiation scheduled portion to be irradiated with the energy beam by the irradiation unit among the plurality of small regions as a first region, and set at least one small region among other small regions that have not been set as the first region as a second region, and a pre-heating control unit configured to control an output of the pre-heating unit such that the first region and the second region are pre-heated at mutually different temperatures.

### Effects of Invention

According to a three-dimensional shaping device and a pre-heating device of the present disclosure, shaping processing can be efficiently performed.

### Brief Description of Drawings

FIG. 1 is a diagram illustrating a cross section of a shaping device according to a first embodiment.
FIG. 2 is a diagram illustrating a forming unit included in the shaping device illustrated in FIG. 1.
FIG. 3 is a block diagram illustrating a controller included in the shaping device illustrated in FIG. 1.
FIG. 4 is a diagram illustrating a powder bed pre-heated by the shaping device illustrated in FIG. 1.
FIG. 5 is a diagram illustrating a powder bed pre-heated by pre-heating processing of a powder bed according to a first modification.
FIG. 6 is a diagram illustrating the powder bed pre-heated by the pre-heating processing of the powder bed according to the first modification.
FIG. 7 is a diagram illustrating a powder bed pre-heated by pre-heating processing of a powder bed according to a second modification.
FIG. 8 is a diagram illustrating a powder bed pre-heated by a shaping device according to a second embodiment.
FIG. 9 is a diagram illustrating a powder bed pre-heated by a shaping device according to a third embodiment.

### Description of Embodiments

A three-dimensional shaping device according to one aspect of the present disclosure includes: a table having a main surface onto which a powder material is supplied; a forming unit disposed to face the main surface and configured to form a shaped object by laminating a plurality of shaped portions formed of the powder material; and a controller configured to control an operation of the forming unit. The table rotates relative to the forming unit in a predetermined rotation direction about a rotation axis. The forming unit has a supply unit configured to supply the powder material onto the main surface to form a powder bed, a pre-heating unit disposed downstream of the supply unit in the rotation direction and capable of pre-heating each of a plurality of regions in the powder bed at different temperatures, and an irradiation unit disposed downstream of the pre-heating unit in the rotation direction and configured to irradiate at least a part of the pre-heated powder bed with an energy beam. The controller includes a region division unit configured to divide the powder bed into a plurality of small regions, a region setting unit configured to set a small region including an irradiation scheduled portion to be irradiated with the energy beam by the irradiation unit among the plurality of small regions as a first region, and set at least one small region among other small regions that have not been set as the first region as a second region, and a pre-heating control unit configured to control an output of the pre-heating unit such that the first region and the second region are pre-heated at mutually different temperatures.

In the three-dimensional shaping device, the region division unit divides the powder bed into a plurality of small regions, the region setting unit sets a small region including the irradiation scheduled portion to be irradiated with the energy beam by the irradiation unit among the plurality of small regions as a first region, and sets at least one small region among other small regions that have not been set as the first region as a second region, and the pre-heating control unit controls an output of the pre-heating unit such that the first region and the second region are pre-heated at mutually different temperatures. Thus, for example, the three-dimensional shaping device can set the small region including the irradiation scheduled portion to be irradiated with the energy beam as the first region, set the small region not including the irradiation scheduled portion as the second region, and pre-heat the second region at a lower temperature than the first region. That is, the three-dimensional shaping device can pre-heat a region not to be irradiated with the energy beam (powder material that does not configure a shaped object) in the powder bed at a low temperature even when pre-heating a region to be irradiated with the energy beam (powder material that configures a shaped object) at a high temperature. Therefore, a pre-sintered body is less likely to be generated in the powder material that does not configure the shaped object, and a removal time of the pre-sintered body can be reduced. Thus, according to this three-dimensional shaping device, shaping processing can be efficiently performed.

The pre-heating control unit of the three-dimensional shaping device may control the output of the pre-heating unit such that the first region is pre-heated at a higher temperature than the second region. According to this configuration, the irradiation scheduled portion to be irradiated with the energy beam in the powder bed can be more reliably pre-heated.

The pre-heating control unit of the three-dimensional shaping device may control an output of the pre-heating unit such that the first region is pre-heated at a temperature equal to or higher than a pre-sintering temperature of the powder material and the second region is pre-heated at a lower temperature than the pre-sintering temperature. According to this configuration, it is possible to more reliably pre-heat a region to be irradiated with the energy beam in the powder bed (powder material that configures a shaped object), and it is possible to more reliably suppress generation of a pre-sintered body in a region not to be irradiated with the energy beam (powder material that does not configure a shaped object).

The region division unit of the three-dimensional shaping device may divide the powder bed into a plurality of small regions in a radial direction of a circle centered on the rotation axis. According to this configuration, when a region to be irradiated with the energy beam and a region not to be irradiated with the energy beam are positioned side by side in the radial direction of the circle centered on the rotation axis, for example, the region to be irradiated with the energy beam (powder material that configures a shaped object) can be pre-heated at a temperature equal to or higher than the pre-sintering temperature of the powder material, and the region not to be irradiated with the energy beam (powder material that does not configure a shaped object) can be pre-heated at a lower temperature than the pre-sintering temperature. Therefore, it is possible to more reliably pre-heat the powder material that configures the shaped object, and it is possible to more reliably suppress the generation of the pre-sintered body in the powder material that does not configure the shaped object.

The region division unit of the three-dimensional shaping device may divide the powder bed into the plurality of small regions in the rotation direction centered on the rotation axis. According to this configuration, when the region to be irradiated with the energy beam and the region not irradiated with the energy beam are positioned side by side in the rotation direction centered on the rotation axis, for example, the region to be irradiated with the energy beam (powder material that configures a shaped object) can be pre-heated at a temperature equal to or higher than the pre-sintering temperature of the powder material, and the region not to be irradiated with the energy beam (powder material that does not configure a shaped object) can be pre-heated at a lower temperature than the pre-sintering temperature. Therefore, it is possible to more reliably pre-heat the powder material that configures the shaped object, and it is possible to more reliably suppress the generation of the pre-sintered body in the powder material that does not configure the shaped object.

The pre-heating unit of the three-dimensional shaping device may include a plurality of divided pre-heating units arranged in the radial direction of the circle centered on the rotation axis, and the pre-heating control unit may maintain outputs of the divided pre-heating units constant while the table makes one rotation. According to this configuration, since pre-heating processing by the pre-heating unit is simple, a processing load on the pre-heating unit and the controller is reduced.

The pre-heating control unit of the three-dimensional shaping device may vary the output of the pre-heating unit while the table makes one rotation. According to this configuration, when the first region and the second region are arranged in the rotation direction centered on the rotation axis, each of the first region and the second region can be pre-heated at a suitable temperature.

The plurality of shaped portions may include a first shaped portion and a second shaped portion formed on the first shaped portion, and the region setting unit may set, as the first region, a small region including a portion overlapping the irradiation scheduled portion of the powder bed corresponding to the second shaped portion among the plurality of small regions in the powder bed corresponding to the first shaped portion. According to this configuration, for example, when pre-heating the powder bed corresponding to the first shaped portion, the small region including the portion overlapping the irradiation scheduled portion of the powder bed corresponding to the second shaped portion can be pre-heated at a high temperature. Thus, when pre-heating the powder bed corresponding to the second shaped portion, the irradiation scheduled portion of the powder bed corresponding to the second shaped portion can be more reliably raised to a desired temperature.

The three-dimensional shaping device may include a temperature detection unit configured to detect a temperature of the powder bed, and the pre-heating control unit may control the output of the pre-heating unit based on a detection result by the temperature detection unit. According to this configuration, the powder bed can be more reliably raised to a desired temperature.

The pre-heating unit of the three-dimensional shaping device may be disposed so as to face the main surface across the powder bed. According to this configuration, the powder bed can be pre-heated more reliably.

A pre-heating device according to one aspect of the present disclosure is a pre-heating device that pre-heats a powder material that is sintered or melted by being irradiated with an energy beam to become a shaped object, the pre-heating device including: a pre-heating unit capable of pre-heating each of a plurality of regions in a powder bed formed of the powder material supplied onto a main surface of a table at different temperatures; and a controller configured to control an output of the pre-heating unit, in which the controller has a region division unit configured to divide the powder bed into a plurality of small regions, a region setting unit configured to set a small region including an irradiation scheduled portion to be irradiated with the energy beam among the plurality of small regions as a first region, and set at least one small region among other small regions that have not been set as the first region as a second region, and a pre-heating control unit configured to control the output of the pre-heating unit such that the first region and the second region are pre-heated at mutually different temperatures.

The pre-heating device includes a pre-heating unit and a controller similar to those of the three-dimensional shaping device. Thus, for example, the pre-heating device can set a small region including the irradiation scheduled portion to be irradiated with the energy beam as a first region, set a small region not including the irradiation scheduled portion as a second region, and pre-heat the second region at a lower temperature than the first region. That is, the pre-heating device can pre-heat a region not to be irradiated with the energy beam (powder material that does not configure a shaped object) in the powder bed at a low temperature even when pre-heating a region to be irradiated with the energy beam (powder material that configures a shaped object) at a high temperature. Therefore, a pre-sintered body is less likely to be generated in the powder material that does not configure the shaped object, and a removal time of the pre-sintered body can be reduced. Therefore, according to this pre-heating device, shaping processing can be efficiently performed.

Hereinafter, modes for carrying out the present disclosure will be described in detail with reference to the accompanying drawings. In the description of the drawings, the same elements will be given the same reference numerals, and redundant description thereof will be omitted.

### [First Embodiment]

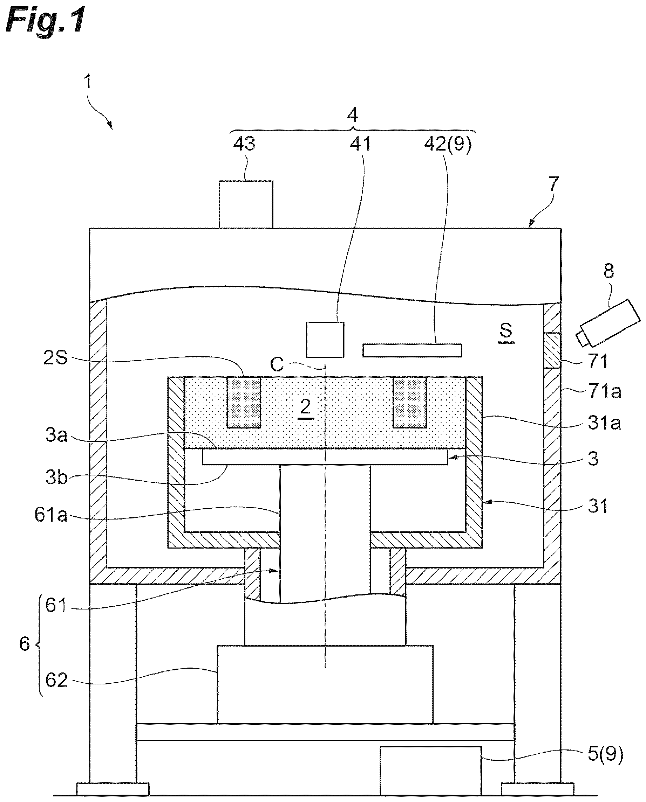

A shaping device 1 illustrated in FIG. 1 is a three-dimensional shaping device that forms a three-dimensional shaped object 2S from a powder material 2. The shaping device 1 is a so-called 3D printer. The powder material 2 is, for example, a metal powder. The powder material 2 is, for example, a titanium-based metal powder, an Inconel powder, or an aluminum powder. The powder material 2 is not limited to a metal powder. The powder material 2 may be, for example, a resin powder or a powder including carbon fibers such as carbon fiber reinforced plastics (CFRP) and a resin. The powder material 2 may be another powder having conductivity. The powder material 2 is not limited to a material having conductivity. For example, when a laser is used as an energy beam, the powder material 2 may not have conductivity.

The shaped object 2S is formed by irradiating the powder material 2 with an electron beam. Specifically, the shaping device 1 irradiates the powder material 2 with an electron beam. A temperature of the powder material 2 is raised by irradiation with the electron beam. The heated powder material 2 is sintered or melted. When the electron beam irradiation is completed, the temperature of the powder material 2 decreases. As a result, the powder material 2 solidifies. The shaping device 1 applies a new powder material 2 onto the solidified powder material 2 (hereinafter, referred to as a "shaped portion"), and then irradiates the applied powder material 2 with the electron beam to form a new shaped portion. Thus, the shaping device 1 forms the shaped object 2S by laminating a plurality of shaped portions by repeatedly executing the application of the powder material 2 and the irradiation of the electron beam. In other words, the shaped object 2S is formed of a plurality of laminated shaped portions. In this example, the shaping device 1 irradiates the powder material 2 applied on the rotating table 3 with the electron beam to perform shaping.

The shaping device 1 includes a table 3, a forming unit 4, a controller 5, a drive unit 6, a housing 7, and a temperature detection unit 8. The table 3 has a pair of main surfaces 3a and 3b facing each other. The table 3 has a circular plate shape. The main surface 3a is a flat surface. The powder material 2 and the shaped object 2S are placed on the main surface 3a. The table 3 is rotated in a predetermined rotation direction about a rotation axis C by the drive unit 6 to be described later. Further, the table 3 is lifted and lowered along the rotation axis C. In this example, the rotation axis C is along a vertical direction. The rotation axis C is orthogonal to the main surface 3a. In the following description, the terms "above" and "below" are used with reference to a state in which the rotation axis C is along the vertical direction. For example, "A member is disposed above B member" means that the A member is disposed farther from a ground than the B member, and "A member is disposed below B member" means that the A member is disposed closer to the ground than the B member.

A shaping tank 31 is disposed around the table 3. The shaping tank 31 is a container for holding the powder material 2 on the main surface 3a of the table 3. The shaping tank 31 has a wall portion 31a. The wall portion 31a is formed along an outer edge of the table 3 when viewed from the direction along the rotation axis C. The wall portion 31a holds the powder material 2 on the main surface 3a.

The forming unit 4 is disposed above the table 3. The forming unit 4 is disposed so as to face the main surface 3a of the table 3 with the powder material 2 interposed therebetween. "The forming unit 4 faces the main surface 3a" means that at least a part of the forming unit 4 overlaps the main surface 3a when viewed from the direction along the rotation axis C. The forming unit 4 processes the powder material 2 to form the shaped object 2S. The forming unit 4 has a feeder 41, a heater 42, and a beam source 43. The feeder 41 supplies the powder material 2 onto the main surface 3a of the table 3. The heater 42 pre-heats the supplied powder material 2. The beam source 43 irradiates the pre-heated powder material 2 with an electron beam to form a shaped portion. The feeder 41, the heater 42, and the beam source 43 are electrically connected to the controller 5.

The controller 5 controls the shaping device 1. For example, under the control of the controller 5, the forming unit 4 forms the shaped object 2S on the table 3, and the drive unit 6 rotates and lifts and lowers the table 3.

The drive unit 6 has a rotation unit 61 that rotates the table 3 and a lifting and lowering unit 62 that lifts and lowers the table 3. The rotation unit 61 and the lifting and lowering unit 62 are electrically connected to the controller 5. The rotation unit 61 has a shaft portion 61a and an actuator such as a motor (not illustrated). The shaft portion 61a extends in a direction orthogonal to the main surface 3a of the table 3. One end of the shaft portion 61a is connected to the main surface 3b of the table 3. The actuator included in the drive unit 6 rotates the shaft portion 61a in a predetermined rotation direction about the rotation axis C. As a result, the table 3 connected to the shaft portion 61a rotates in the predetermined rotation direction about the rotation axis C with respect to the forming unit 4. In this example, the table 3 rotates clockwise when viewed from above the main surface 3a. The lifting and lowering unit 62 has an actuator such as a motor (not illustrated). The actuator included in the lifting and lowering unit 62 lifts and lowers the shaft portion 61a along the rotation axis C. As a result, the table 3 connected to the shaft portion 61a is lifted and lowered along the rotation axis C with respect to the forming unit 4. That is, the lifting and lowering unit 62 moves the table 3 along the rotation axis C in a direction toward the forming unit 4 and in a direction away from the forming unit 4.

The housing 7 defines a shaping space S for forming the shaped object 2S. The housing 7 accommodates the table 3 on which the powder material 2 and the shaped object 2S are placed and the forming unit 4. The shaping space S is an airtight space that can be depressurized for forming the shaped object 2S by the forming unit 4. A window portion 71 is formed in a wall portion 71a of the housing 7. The window portion 71 is a window capable of detecting a temperature in the shaping space S from the outside of the shaping device 1. The window portion 71 is formed of, for example, glass or the like.

The temperature detection unit 8 detects a temperature of the powder material 2 through the window portion 71. The temperature detection unit 8 is, for example, a thermographic device or a radiation thermometer. The temperature detection unit 8 is electrically connected to the controller 5. The temperature detection unit 8 outputs a detection result to a database provided inside or outside the shaping device 1. The detection result of the temperature detection unit 8 is used, for example, for controlling the heater 42.

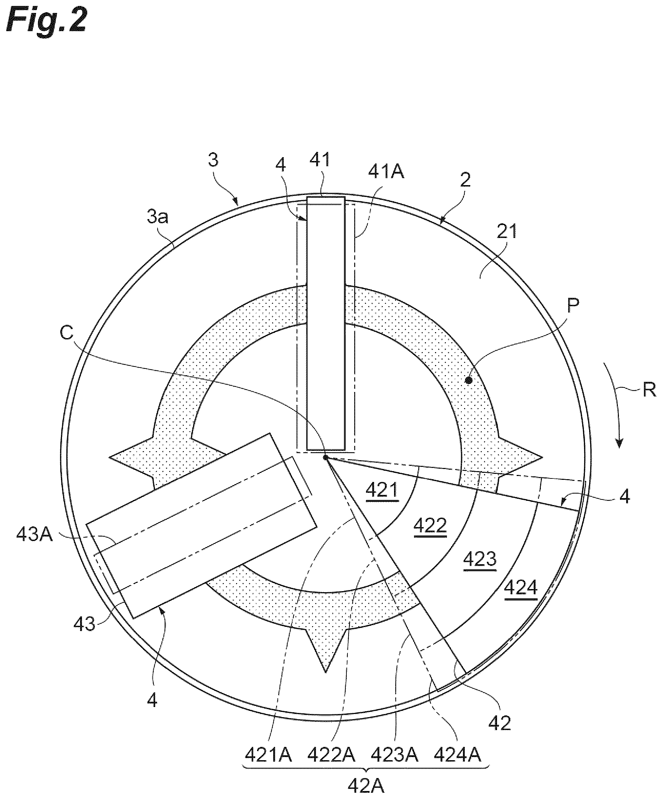

Details of the forming unit 4 will be described with reference to FIG. 2. The feeder 41, the heater 42, and the beam source 43 overlap the main surface 3a of the table 3 when viewed from the direction along the rotation axis C. The feeder 41, the heater 42, and the beam source 43 are disposed in this order along a rotation direction R of the table 3. In this example, the rotation direction R is a clockwise direction when the table 3 is viewed from above the main surface 3a. The heater 42 is disposed downstream of the feeder 41 along the rotation direction R. The beam source 43 is disposed downstream of the heater 42 along the rotation direction R.

The feeder 41 is a supply unit. The feeder 41 forms a powder bed 21 by supplying the powder material 2 onto the main surface 3a of the table 3. The powder bed 21 is a layer of the powder material 2 having a predetermined thickness. For example, the feeder 41 has a raw material tank (not illustrated) and a leveling portion. The raw material tank stores the powder material 2 and supplies the powder material 2 onto the main surface 3a. The leveling portion levels a surface of the powder material 2 supplied onto the main surface 3a. Thus, the powder bed 21 is formed on the main surface 3a. The feeder 41 may have a roller unit, a rod-like member, or a brush unit instead of the leveling portion. The feeder 41 forms a supply region 41Aon the main surface 3a. The supply region 41A is a region where the powder material 2 is supplied by the feeder 41. Furthermore, the supply region 41A is also a region in which the supplied powder material 2 is leveled. A position of the supply region 41A does not change with respect to the rotation of the table 3. That is, when the table 3 and the supply region 41A are defined by a certain coordinate system, the table 3 rotates with respect to the coordinate system. However, the supply region 41A does not move with respect to the coordinate system.

The heater 42 is a pre-heating unit. The heater 42 pre-heats the powder bed 21 formed by the feeder 41. The heater 42 is disposed above and away from the main surface 3a of the table 3. Since the heater 42 is disposed above and away from the main surface 3a of the table 3, at least the powder bed and the shaped object 2S being shaped can be disposed between the main surface 3a of the table 3 and the heater 42. The heater 42 configures the pre-heating device 9 together with the controller 5. In this example, a shape of the heater 42 is a fan shape when viewed from the direction along the rotation axis C. The "pre-heating the powder bed" is processing of heating the powder bed 21 formed by the feeder 41 to a predetermined temperature before being irradiated with the electron beam by the beam source 43. This heating processing may be, for example, processing of pre-sintering the powder bed 21 (powder material 2). The "pre-sintering" is a state in which the powder materials 2 are diffused and joined at a minimum point by a diffusion phenomenon. Hereinafter, the temperature at which the powder material 2 is pre-sintered is referred to as a "pre-sintering temperature". As an example, the heater 42 heats the powder material 2 to the pre-sintering temperature. The pre-sintering temperature is, for example, half or more of a melting point of the powder material 2. This is based on the fact that the diffusion phenomenon of sintering becomes active generally at half or more of the melting point. For example, when the powder material 2 is titanium, the pre-sintering temperature is 700°C or more and 800°C or less. A melting point of a titanium alloy is about 1500°C or more and 1600°C or less. When the powder material 2 is aluminum, the pre-sintering temperature is 300°C. A melting point of aluminum is about 660°C.

The heater 42 is disposed above the table 3. The heater 42 pre-heats the powder material 2 by, for example, radiant heat. The heater 42 may be, for example, an infrared heater. The heater 42 forms a pre-heating region 42A on the main surface 3a. The pre-heating region 42A is a region pre-heated by the heater 42. The pre-heating region 42A does not change in position with respect to the rotation of the table 3. That is, when the table 3 and the pre-heating region 42A are defined by a certain coordinate system, the table 3 rotates with respect to the coordinate system. However, the pre-heating region 42A does not move with respect to the coordinate system.

The heater 42 has a plurality of divided heaters. The plurality of divided heaters are a plurality of divided pre-heating units. Each of the plurality of divided heaters is arranged in a radial direction of a circle centered on the rotation axis C. In this example, the heater 42 has four divided heaters of a first divided heater 421, a second divided heater 422, a third divided heater 423, and a fourth divided heater 424. The first divided heater 421, the second divided heater 422, the third divided heater 423, and the fourth divided heater 424 are arranged in this order from the rotation axis C toward an outside.

The first divided heater 421 forms a first pre-heating region 421A, which is pre-heated by the first divided heater 421, in the powder bed 21. The second divided heater 422 forms a second pre-heating region 422A, which is pre-heated by the second divided heater 422, in the powder bed 21. The third divided heater 423 forms a third pre-heating region 423A, which is pre-heated by the third divided heater 423, in the powder bed 21. The fourth divided heater 424 forms a fourth pre-heating region 424A, which is pre-heated by the fourth divided heater 424, in the powder bed 21.

The first pre-heating region 421A, the second pre-heating region 422A, the third pre-heating region 423A, and the fourth pre-heating region 424A are arranged in this order from the rotation axis C toward the outside. The first pre-heating region 421A, the second pre-heating region 422A, the third pre-heating region 423A, and the fourth pre-heating region 424A configure the pre-heating region 42A. In the following description, when there is no need to distinguish the first divided heater 421, the second divided heater 422, the third divided heater 423, and the fourth divided heater 424 from one another, they may be collectively referred to as "divided heaters".

Each divided heater is electrically connected to the controller 5 (see FIG. 1). Output of each divided heater can be independently controlled by the controller 5. For example, the controller 5 can set outputs of the first divided heater 421 and the fourth divided heater 424 to be lower than outputs of the second divided heater 422 and the third divided heater 423. In this case, regions passing through the first pre-heating region 421A and the fourth pre-heating region 424A in the powder bed 21 are pre-heated at a lower temperature than regions passing through the second pre-heating region 422A and the third pre-heating region 423A in the powder bed 21. That is, the heater 42 may pre-heat each of the plurality of regions in the powder bed 21 at different temperatures. As an example, the heater 42 can pre-heat a region passing through the first pre-heating region 421A at a temperature equal to or higher than the pre-sintering temperature of the powder material 2. In addition, the heater 42 can pre-heat the region passing through the fourth pre-heating region 424A at the temperature equal to or higher than the pre-sintering temperature of the powder material 2. Furthermore, the heater 42 can pre-heat the region passing through the second pre-heating region 422A at a lower temperature than the pre-sintering temperature. Furthermore, the heater 42 can pre-heat the region passing through the third pre-heating region 423A at the lower temperature than the pre-sintering temperature.

The beam source 43 is an irradiation unit. The beam source 43 irradiates the powder bed 21 with an electron beam. The beam source 43 is, for example, an electron gun. The beam source 43 generates an electron beam according to a potential difference generated between a cathode and an anode. Then, the beam source 43 converges the electron beam by electric field adjustment, and irradiates the powder bed 21 with the electron beam. The beam source 43 forms an irradiation region 43A on the main surface 3a. The irradiation region 43A is a region that can be irradiated with the electron beam by the beam source 43. A position of the irradiation region 43A is not changed with respect to the rotation of the table 3. That is, when the table 3 and the irradiation region 43A are defined by a certain coordinate system, the table 3 rotates with respect to the coordinate system. However, the irradiation region 43A does not move with respect to the coordinate system.

The beam source 43 emits the electron beam along a desired scanning line in the irradiation region 43A. In the example illustrated in FIG. 2, an irradiation scheduled portion P to be irradiated with the electron beam in the powder bed 21 is indicated by hatching. As illustrated in FIG. 2, a shape of the portion to be irradiated with the electron beam may not coincide with a shape of the irradiation region 43A. The beam source 43 irradiates the irradiation scheduled portion P with the electron beam when the irradiation scheduled portion P passes through the irradiation region 43A by the rotation of the table 3. The portion irradiated with the electron beam in the powder bed 21 is heated to a higher temperature than a temperature after being pre-heated by the heater 42. Specifically, the temperature is raised to the sintering temperature or melting temperature of the powder material 2. The portion irradiated with the electron beam in the powder bed 21 is sintered or melted. When the electron beam irradiation is completed, the temperature of the portion irradiated with the electron beam is lowered, such that the portion is solidified. A time when the electron beam irradiation is completed can also be said to be a time when the passage through the irradiation region 43A is ended. The solidified portion is a shaped portion that configures the shaped object 2S.

As described above, the positions of the supply region 41A, the pre-heating region 42A, and the irradiation region 43A do not change with respect to the rotation of the table 3. Therefore, when a certain point is assumed on the table 3, the point passes through the supply region 41A, the pre-heating region 42A, and the irradiation region 43A in this order as the table 3 rotates. That is, by disposing the feeder 41, the heater 42, and the beam source 43 along the rotation direction R of the table 3 and rotating the table 3, the forming processing of the powder bed 21, the pre-heating processing of the powder bed 21, and the irradiation processing of the electron beam can be executed in this order on the main surface 3a of the table 3. After forming the shaped portion in a certain powder bed 21, the shaping device 1 further applies the powder material 2 onto the powder bed 21 to form a new powder bed 21. After pre-heating the newly formed powder bed 21, the shaping device 1 irradiates the powder bed with the electron beam to form a shaped portion. Thus, the shaping device 1 repeatedly executes the forming processing of the powder bed 21, the pre-heating processing of the powder bed 21, and the irradiation processing of the electron beam while rotating the table 3. As a result, the shaped object 2S (see FIG. 1) in which a plurality of shaped portions are laminated is formed. The table 3 is lowered as the shaping of the shaped object 2S proceeds. That is, the rotation unit 61 rotates the table 3. In parallel with this rotation, the lifting and lowering unit 62 lowers the table 3.

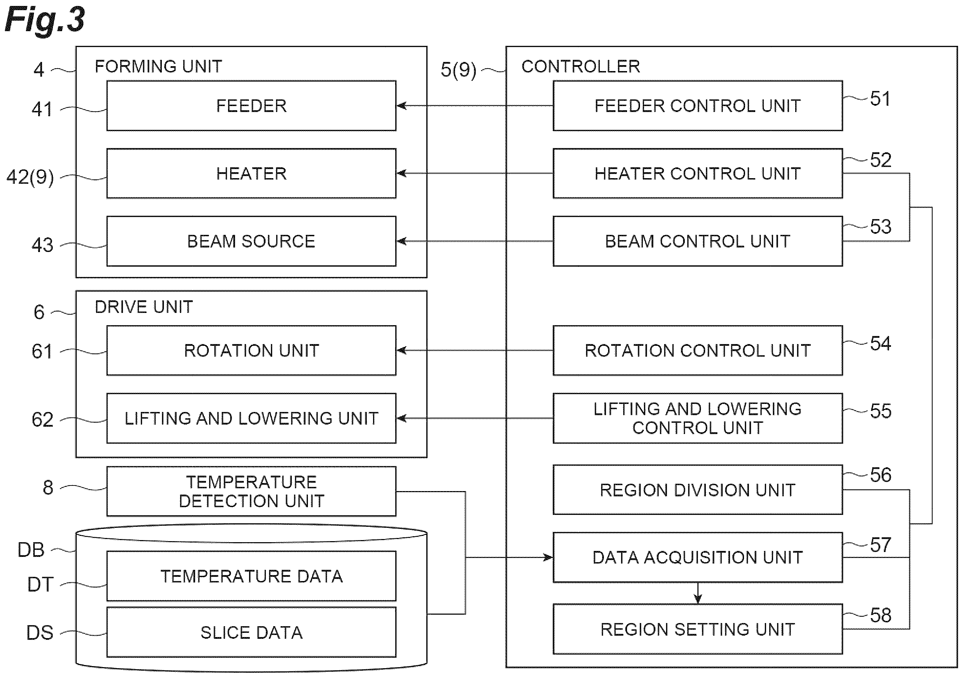

FIG. 3 is a block diagram illustrating the controller 5. The controller 5 is a computer including hardware such as a central processing unit (CPU), a read only memory (ROM), and a random access memory (RAM), and software such as a program stored in the ROM. The controller 5 includes, for example, an input signal circuit, an output signal circuit, or a power supply circuit. The controller 5 includes, for example, an arithmetic unit and a memory. The memory can store data necessary for various types of control.

The controller 5 has a feeder control unit 51, a heater control unit 52, a beam control unit 53, a rotation control unit 54, a lifting and lowering control unit 55, a region division unit 56, a data acquisition unit 57, and a region setting unit 58.

The feeder control unit 51 controls the feeder 41 for forming the powder bed 21 by supplying the powder material 2 onto the main surface 3a of the table 3. That is, the feeder control unit 51 functions as a supply control unit. The feeder control unit 51 may control, for example, a timing of supplying the powder material 2 onto the main surface 3a, a supply amount of the powder material 2, an operation of a recoater which is a leveling portion, and the like. The feeder control unit 51 outputs a control signal for controlling the feeder 41 to the feeder 41. The feeder 41 operates based on the control signal received from the feeder control unit 51.

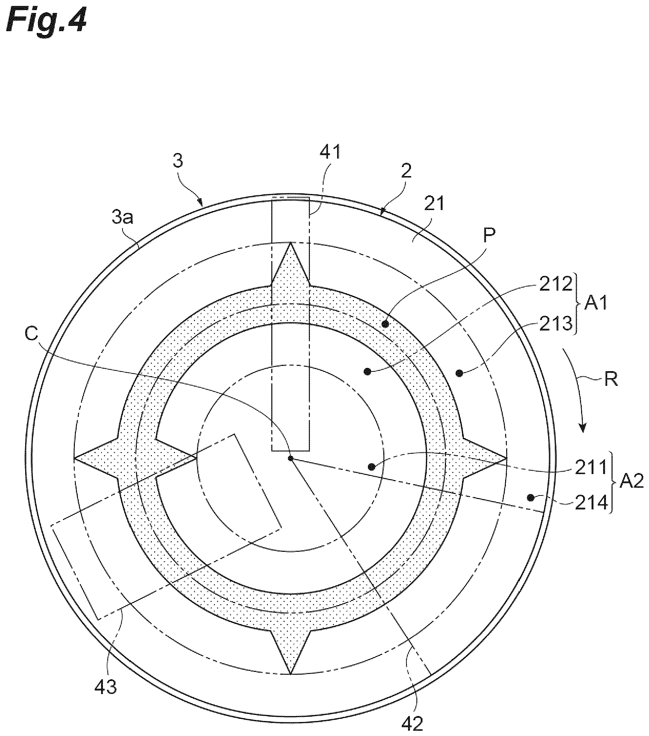

The heater control unit 52 controls the heater 42 for pre-heating the powder bed 21 formed on the main surface 3a of the table 3. That is, the heater control unit 52 functions as a pre-heating control unit. The heater control unit 52 can control outputs of the first divided heater 421, the second divided heater 422, the third divided heater 423, and the fourth divided heater 424 included in the heater 42. The control of the output of the heater 42 (each divided heater) includes control related to a magnitude of the output. Furthermore, the control of the output of the heater 42 (each divided heater) also includes control related to on and off of the heater 42 (each divided heater). The heater control unit 52 controls the output of the heater 42 based on setting information received from the region setting unit 58 to be described later. Details of the control processing of the heater 42 based on the setting information will be described later with reference to FIG. 4. Furthermore, the heater control unit 52 may control the heater 42 based on, for example, a material of the powder material 2, a type of the powder material 2, and a rotation speed of the table 3. Furthermore, the heater control unit 52 may control the heater 42 based on, for example, temperature data DT of the powder bed 21 received from the data acquisition unit 57 to be described later. The heater control unit 52 outputs a control signal for controlling the heater 42 to the heater 42. The heater 42 operates based on the control signal received from the heater control unit 52.

The beam control unit 53 controls the beam source 43 in order to irradiate the powder bed 21 with an electron beam for sintering or melting the powder material 2. That is, the beam control unit 53 functions as an irradiation control unit. The beam control unit 53 controls, for example, an irradiation position, irradiation start, irradiation stop, an irradiation time, and the like of the electron beam. The beam control unit 53 outputs a control signal for controlling the beam source 43 to the beam source 43. The beam source 43 operates based on the control signal received from the beam control unit 53.

The rotation control unit 54 controls the rotation unit 61 for rotating the table 3. The rotation control unit 54 controls, for example, the rotation speed or the like of the table 3. The rotation control unit 54 outputs a control signal for controlling the rotation unit 61 to the rotation unit 61. The rotation unit 61 operates based on the control signal received from the rotation control unit 54.

The lifting and lowering control unit 55 controls the lifting and lowering unit 62 for lifting and lowering the table 3. The lifting and lowering control unit 55 controls, for example, a lowering speed or the like of the table 3. The lifting and lowering control unit 55 outputs a control signal for controlling the lifting and lowering unit 62 to the lifting and lowering unit 62. The lifting and lowering unit 62 operates based on the control signal received from the lifting and lowering control unit 55.

The region division unit 56 divides the powder bed 21 formed on the main surface 3a of the table 3 into a plurality of small regions. "Dividing the powder bed 21 into a plurality of small regions" does not mean physically dividing the powder bed 21 but setting a plurality of small regions in the powder bed 21. In other words, "dividing the powder bed 21 into a plurality of small regions" means distinguishing one region from another region in the powder bed 21. As an example, the region division unit 56 divides a plurality of regions to be pre-heated by each of the plurality of divided heaters into a plurality of small regions. Details of the region division processing of the powder bed 21 will be described later with reference to FIG. 4. The region division unit 56 outputs information indicating a shape and position of each divided small region to the region setting unit 58 to be described later.

The data acquisition unit 57 acquires temperature data DT and slice data DS from a database DB provided inside or outside the shaping device 1. The temperature data DT indicates a temperature of the powder bed 21 detected by the temperature detection unit 8. The temperature data DT may be, for example, a temperature of the powder bed 21 before being pre-heated by the heater 42 or a temperature of the powder bed 21 after being pre-heated by the heater 42. The data acquisition unit 57 outputs the acquired temperature data DT to the heater control unit 52.

The slice data DS is data indicating a shape of a cross-section of the shaped object 2S. In other words, the slice data DS is data indicating a shape of each shaped portion that configures the shaped object 2S. The slice data DS is generated based on, for example, three-dimensional computer-aided design (CAD) data of the shaped object 2S. The slice data DS of the number corresponding to the number of shaped portions (the number of layers) that configure the shaped object 2S is generated. The slice data DS is stored in the database DB. The data acquisition unit 57 outputs the acquired slice data DS to the region setting unit 58 and the beam control unit 53.

The region setting unit 58 sets a small region including an irradiation scheduled portion P among the plurality of small regions divided by the region division unit 56 as a first region. Further, the region setting unit 58 sets at least one small region among other small regions that have not been set as a first region A1 among the plurality of small regions divided by the region division unit 56 as a second region A2. First, the region setting unit 58 specifies a shape and position of the irradiation scheduled portion P in the powder bed 21 based on the slice data DS. As described above, the portion irradiated with the electron beam in the powder bed 21 is the shaped portion. Therefore, the shape and position of the irradiation scheduled portion P match a shape and position of the shaped portion indicated by the slice data DS. Therefore, the region setting unit 58 can specify the shape and position of the irradiation scheduled portion P in the powder bed 21 based on the slice data DS. The region setting unit 58 sets the small region including the irradiation scheduled portion P as the first region A1 based on the specified shape and position of the irradiation scheduled portion P. Further, the region setting unit 58 sets at least one small region among other small regions that have not been set as the first region A1 as the second region A2. Note that "setting a small region including an irradiation scheduled portion P as a first region" means setting at least a small region including an irradiation scheduled portion P among a plurality of small regions divided by the region division unit 56 as the first region A1. That is, the region setting unit 58 sets a small region including the irradiation scheduled portion P as the first region A1. The region setting unit 58 outputs, to the heater control unit 52, setting information indicating whether each small region has been set as the first region or the second region.

An example of the pre-heating processing of the powder bed 21 by the shaping device 1 will be described with reference to FIG. 4. First, the region division unit 56 divides the powder bed 21 formed on the main surface 3a of the table 3 into a plurality of small regions. In the example illustrated in FIG. 4, the region division unit 56 divides the powder bed 21 into four small regions 211, 212, 213, and 214 in the radial direction of the circle centered on the rotation axis C. The small region 211 is a circular region centered on the rotation axis C. The small region 212, the small region 213, and the small region 214 are a plurality of annular regions centered on the rotation axis C. The small region 211, the small region 212, the small region 213, and the small region 214 are positioned in this order from the rotation axis C toward the outside. An outer diameter of the small region 211 matches an inner diameter of the small region 212. An outer diameter of the small region 212 matches an inner diameter of the small region 213. An outer diameter of the small region 213 matches an inner diameter of the small region 214.

The four small regions 211, 212, 213, and 214 are each pre-heated by a corresponding divided heater. Specifically, the small region 211 is pre-heated by the first divided heater 421. The small region 212 is pre-heated by the second divided heater 422. The small region 213 is pre-heated by the third divided heater 423. The small region 214 is pre-heated by the fourth divided heater 424. That is, the small region 211 passes through the first pre-heating region 421A by the rotation of the table 3. The small region 212 passes through the second pre-heating region 422A. The small region 213 passes through the third pre-heating region 423A. The small region 214 passes through the fourth pre-heating region 424A. The region division unit 56 outputs information indicating a shape and position of each divided small region to the region setting unit 58.

The region setting unit 58 sets each of the four small regions 211, 212, 213, and 214 divided by the region division unit 56 as the first region A1 or the second region A2. In the example illustrated in FIG. 4, the region setting unit 58 sets a small region including the irradiation scheduled portion P as the first region A1. The region setting unit 58 sets a small region not including the irradiation scheduled portion P as the second region A2. At this time, the region setting unit 58 specifies the irradiation scheduled portion P based on the slice data DS received from the data acquisition unit 57. The small regions 212 and 213 include the irradiation scheduled portion P. On the other hand, the small regions 211 and 214 do not include the irradiation scheduled portion P. Therefore, the region setting unit 58 sets the small regions 212 and 213 as the first region A1. The region setting unit 58 sets the small regions 211 and 214 as the second region A2. The region setting unit 58 outputs, to the heater control unit 52, setting information indicating whether each small region has been set as the first region A1 or the second region A2.

The heater control unit 52 controls the heater 42 based on the setting information received from the region setting unit 58. Specifically, an output of the heater 42 is controlled such that the first region A1 and the second region A2 in the powder bed 21 are pre-heated at mutually different temperatures. In the example illustrated in FIG. 4, the heater control unit 52 controls an output of the heater 42 such that the first region A1 is pre-heated at a higher temperature than the second region A2. In other words, the heater control unit 52 controls an output of each divided heater such that outputs of the second divided heater 422 that pre-heats the small region 212 and the third divided heater 423 that pre-heats the small region 213 are higher than outputs of the first divided heater 421 that pre-heats the small region 211 and the fourth divided heater 424 that pre-heats the small region 214. The heater control unit 52 may control the output of the heater 42 (each divided heater) such that the first region A1 is pre-heated at a temperature equal to or higher than a pre-sintering temperature of the powder material 2. The heater control unit 52 may control the output of the heater 42 (each divided heater) such that the second region A2 is pre-heated at a lower temperature than the pre-sintering temperature of the powder material 2. The heater control unit 52 maintains the output of the heater 42 (each divided heater) constant while the table 3 makes one rotation. In other words, the heater control unit 52 maintains the output of the heater 42 constant while the powder bed 21 corresponding to one piece of slice data DS is pre-heated.

The heater control unit 52 may control the output of the heater 42 based on the temperature data DT received from the data acquisition unit 57. In this case, the heater control unit 52 may control the output of the heater 42 based on the temperature of the powder bed 21 before being pre-heated by the heater 42. The heater control unit 52 may control the output of the heater 42 based on the temperature of the powder bed 21 after being pre-heated by the heater 42. For example, when the temperature of the powder bed 21 before being pre-heated by the heater 42 is higher than an assumed temperature, the heater control unit 52 may perform control to lower the output of the heater 42. The heater control unit 52 may perform control to increase the output of the heater 42 when the temperature of the powder bed 21 before being pre-heated is lower than the assumed temperature. In addition, the heater control unit 52 may perform control to lower the output of the heater 42 when the temperature of the powder bed 21 after being pre-heated is higher than a desired temperature. The heater control unit 52 may perform control to increase the output of the heater 42 when the temperature of the powder bed 21 after being pre-heated is lower than the desired temperature.

The powder bed 21 pre-heated by the pre-heating processing described above is moved to the irradiation region 43A by the rotation of the table 3. Thereafter, the irradiation scheduled portion P is irradiated with the electron beam. The beam control unit 53 that controls the beam source 43 may specify the irradiation scheduled portion P based on the slice data DS and determine the position to be irradiated with the electron beam.

Hereinafter, an operation and effect of the shaping device 1 will be described.

In the shaping device 1, the region division unit 56 divides the powder bed 21 into the plurality of small regions 211, 212, 213, and 214. The region setting unit 58 sets the small regions 212 and 213 including the irradiation scheduled portion P to be irradiated with the electron beam by the beam source 43 among the plurality of small regions 211, 212, 213, and 214 as the first region A1. The region setting unit 58 sets other small regions 211 and 214 that have not been set as the first region A1 as the second region A2. In other words, the region setting unit 58 sets a small region not to be irradiated with the electron beam as the second region A2. The heater control unit 52 controls the output of the heater 42 (each divided heater) such that the first region A1 and the second region A2 are pre-heated at mutually different temperatures. Specifically, the heater control unit 52 controls the output of the heater 42 such that the first region A1 is pre-heated at a higher temperature than the second region A2. Thus, even when pre-heating a region to be irradiated with the electron beam at a high temperature, the shaping device 1 can pre-heat a region not to be irradiated with the electron beam in the powder bed 21 at a low temperature. In other words, even when pre-heating the powder material 2 that configures the shaped object 2S at a high temperature, the shaping device 1 can pre-heat the powder material 2 that does not configure the shaped object 2S at a low temperature. Therefore, a pre-sintered body is less likely to be generated in the powder material 2 that does not configure the shaped object 2S, such that a removal time of the pre-sintered body can be reduced. Therefore, according to this shaping device 1, shaping processing can be efficiently performed.

Furthermore, by pre-heating the powder material 2 that does not configure the shaped object 2S at a low temperature, oxidation of the powder material 2 can be suppressed. Therefore, the powder material 2 that does not configure the shaped object 2S can be reused for shaping processing of another shaped object. That is, the number of times the powder material 2 can be reused can be increased. The operation and effect of the shaping device 1 described above is particularly advantageous when forming a minute shaped object 2S with respect to the powder bed 21.

The heater control unit 52 of the shaping device 1 controls the output of the heater 42 such that the first region A1 is pre-heated at a temperature equal to or higher than a pre-sintering temperature of the powder material 2. Furthermore, the heater control unit 52 controls the output of the heater 42 such that the second region A2 is pre-heated at a lower temperature than the pre-sintering temperature. According to this configuration, it is possible to more reliably pre-heat the region to be irradiated with the electron beam in the powder bed 21. In other words, the powder material 2 that configures the shaped object 2S can be more reliably pre-heated. Furthermore, it is possible to more reliably suppress generation of the pre-sintered body in the region not to be irradiated with the electron beam. In other words, it is possible to more reliably suppress the generation of the pre-sintered body in the powder material 2 that does not configure the shaped object 2S.

The region division unit 56 of the shaping device 1 divides the powder bed 21 into the plurality of small regions 211, 212, 213, and 214 in the radial direction of the circle centered on the rotation axis C. According to this configuration, when the region to be irradiated with the electron beam and the region not to be irradiated with the electron beam are positioned side by side in the radial direction of the circle centered on the rotation axis C, for example, the region to be irradiated with the electron beam can be pre-heated at the temperature equal to or higher than the pre-sintering temperature of the powder material 2, and the region not to be irradiated with the electron beam can be pre-heated at the lower temperature than the pre-sintering temperature. In other words, the powder material 2 that configures the shaped object 2S can be pre-heated at the temperature equal to or higher than the pre-sintering temperature of the powder material 2, and the powder material 2 that does not configure the shaped object 2S can be pre-heated at the lower temperature than the pre-sintering temperature. Therefore, the powder material 2 that configures the shaped object 2S can be more reliably pre-heated. Furthermore, it is possible to more reliably suppress the generation of the pre-sintered body in the powder material 2 that does not configure the shaped object 2S.

The heater 42 of the shaping device 1 has the plurality of divided heaters of the first divided heater 421, the second divided heater 422, the third divided heater 423, and the fourth divided heater 424 arranged in the radial direction of the circle centered on the rotation axis C. The heater control unit 52 maintains the outputs of the first divided heater 421, the second divided heater 422, the third divided heater 423, and the fourth divided heater 424 constant while the table makes one rotation. According to this configuration, the pre-heating processing by the heater 42 is simple. As a result, a processing load on the heater 42 and the controller 5 is reduced.

The shaping device 1 includes the temperature detection unit 8 that detects the temperature of the powder bed 21. The heater control unit 52 controls the output of the heater 42 based on temperature data DT that is the detection result by the temperature detection unit 8. According to this configuration, the powder bed 21 can be more reliably raised to a desired temperature.

The heater 42 of the shaping device 1 is disposed so as to face the main surface 3a of the table 3 across the powder bed 21. According to this configuration, the powder bed 21 can be pre-heated more reliably.

### [First Modification]

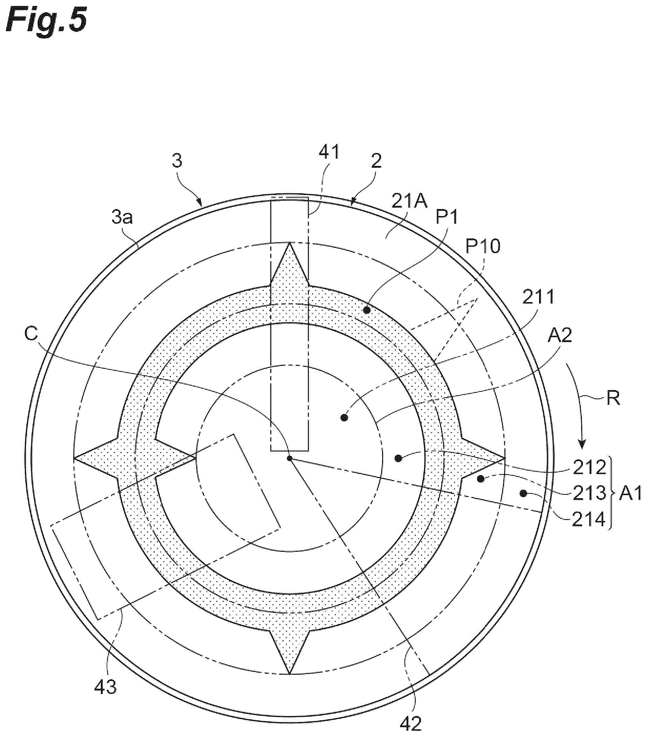

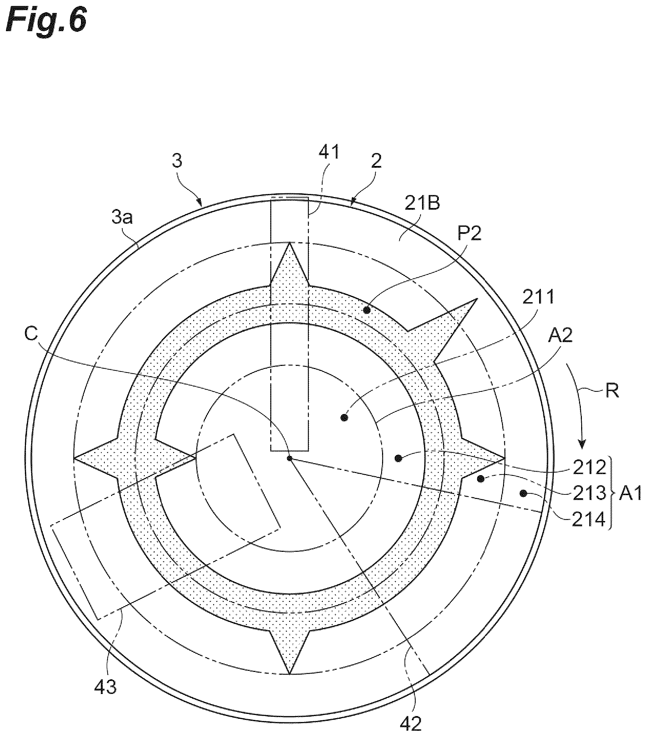

A first modification of the pre-heating processing of the powder bed by the shaping device 1 will be described with reference to FIGS. 5 and 6. As described above, the shaped object 2S is formed by laminating a plurality of shaped portions. The plurality of shaped portions forming the shaped object 2S have a first shaped portion and a second shaped portion. The second shaped portion is formed on the first shaped portion. FIG. 5 illustrates a powder bed 21A for forming the first shaped portion. FIG. 6 illustrates a powder bed 21B for forming the second shaped portion formed on the first shaped portion. The second shaped portion is continuously formed after the first shaped portion is formed. That is, the shaping device 1 forms a new powder bed 21B on the powder bed 21A after forming the first shaped portion in the powder bed 21A. Then, the shaping device 1 forms the second shaped portion in the powder bed 21B.

As illustrated in FIGS. 5 and 6, the region division unit 56 divides each of the powder beds 21A and 21B into four small regions 211, 212, 213, and 214. Shapes and positions of the small regions 211, 212, 213, and 214 of the first modification are similar to those of the first embodiment (see FIG. 4). In the powder bed 21A, the beam source 43 irradiates an irradiation scheduled portion P1 illustrated in FIG. 5 with an electron beam. In the powder bed 21B, the beam source 43 irradiates an irradiation scheduled portion P2 illustrated in FIG. 6 with an electron beam. That is, a portion corresponding to the irradiation scheduled portion P1 in the powder bed 21A is the first shaped portion. A portion corresponding to the irradiation scheduled portion P2 in the powder bed 21B is the second shaped portion. In the first modification, the irradiation scheduled portion P1 is different in shape from the irradiation scheduled portion P2. Specifically, a portion indicated by a broken line in the powder bed 21A illustrated in FIG. 5 is not included in the irradiation scheduled portion P1. The portion indicated by the broken line in the powder bed 21A is hereinafter referred to as an "overlapping portion P10".

Based on the above, pre-heating processing of the powder bed 21A will be described. First, the region setting unit 58 sets as small regions including the irradiation scheduled portion P1 among the four small regions 211, 212, 213, and 214 divided by the region division unit 56. Further, small regions including portions overlapping the irradiation scheduled portion P2 of the powder bed 21B in the powder bed 21A are also set as a first region A1. The portions overlapping the irradiation scheduled portion P2 of the powder bed 21B in the powder bed 21A are the irradiation scheduled portion P1 and the overlapping portion P10. The irradiation scheduled portion P1 and the overlapping portion P10 overlap the irradiation scheduled portion P2 in a laminating direction (direction along the rotation axis C) of the powder beds 21A and 21B. Therefore, in addition to the small regions 212 and 213 including the irradiation scheduled portion P1, the region setting unit 58 sets the small region 214 including the overlapping portion P10 as the first region A1. The region setting unit 58 sets the small region 211 that has not been set as the first region A1 as the second region A2. In other words, the region setting unit 58 sets, as the second region A2, only a small region that does not include the irradiation scheduled portion P1 in the powder bed 21A and does not overlap the irradiation scheduled portion P2 in the powder bed 21B. The region setting unit 58 outputs, to the heater control unit 52, setting information indicating whether each small region in the powder bed 21A has been set as the first region A1 or the second region A2.

The heater control unit 52 controls the heater 42 based on the setting information received from the region setting unit 58. Specifically, the output of the heater 42 is controlled such that the first region A1 and the second region A2 are pre-heated at mutually different temperatures. In the first modification, the heater control unit 52 controls the output of the heater 42 such that the first region A1 is pre-heated at a higher temperature than the second region A2. In other words, the heater control unit 52 controls an output of each divided heater such that outputs of the second divided heater 422 that pre-heats the small region 212, the third divided heater 423 that pre-heats the small region 213, and the fourth divided heater 424 that pre-heats the small region 214 are higher than an output of the first divided heater 421 that pre-heats the small region 211.

The heater control unit 52 may control the output of the heater 42 such that the first region A1 is pre-heated at a temperature equal to or higher than a pre-sintering temperature of the powder material 2. Furthermore, the heater control unit 52 may control the output of the heater 42 such that the second region A2 is pre-heated at a lower temperature than the pre-sintering temperature of the powder material 2. After the pre-heating processing by the heater 42 is completed, the beam source 43 irradiates the irradiation scheduled portion P1 of the powder bed 21A pre-heated by the heater 42 with the electron beam. Thus, the first shaped portion is formed.

Subsequently, the feeder 41 newly forms a powder bed 21B on the powder bed 21A to form a second shaped portion (see FIG. 6). In this example, not only the small regions 212 and 213 but also the small region 214 of the powder bed 21A is pre-heated with high power in advance. Therefore, before the formed powder bed 21B is pre-heated by the heater 42, the temperatures of the small regions 212, 213, and 214 of the powder bed 21B are raised by the heat from the small regions 212, 213, and 214 of the powder bed 21A.

The region setting unit 58 sets each of the small regions 211, 212, 213, and 214 as the first region A1 or the second region A2 in the powder bed 21B. The region setting unit 58 may set the first region A1 and the second region A2 in the powder bed 21B by the same method as the powder bed 21A. That is, when a shaped portion formed on the second shaped portion is a third shaped portion, the region setting unit 58 sets a small region including an irradiation scheduled portion P2 among the four small regions 211, 212, 213, and 214 as the first region A1. Furthermore, the region setting unit 58 may also set, as the first region A1, a small region including a portion overlapping an irradiation scheduled portion of the powder bed corresponding to the third shaped portion in the powder bed 21B.

The region setting unit 58 outputs, to the heater control unit 52, setting information indicating whether each small region in the powder bed 21B has been set as the first region A1 or the second region A2. The heater control unit 52 controls the heater 42 based on the setting information received from the region setting unit 58. The beam source 43 irradiates the irradiation scheduled portion P2 of the powder bed 21B pre-heated by the heater 42 with the electron beam. Thus, the second shaped portion is formed on the first shaped portion. The shaping device 1 can obtain the shaped object 2S by forming a plurality of shaped portions on the second shaped portion by a similar method.

In the first modification, the plurality of shaped portions forming the shaped object 2S include a first shaped portion and a second shaped portion formed on the first shaped portion. The region setting unit 58 sets, as the first region A1, the irradiation scheduled portion P1 overlapping the irradiation scheduled portion P2 of the powder bed 21B corresponding to the second shaped portion among the plurality of small regions 211, 212, 213, and 214 in the powder bed 21A corresponding to the first shaped portion. Furthermore, the region setting unit 58 additionally sets, as the first region A1, the small regions 213, and 214 including the overlapping portion P10 among the plurality of small regions 211, 212, 213, and 214 in the powder bed 21A corresponding to the first shaped portion. According to this configuration, for example, when pre-heating the powder bed 21A corresponding to the first shaped portion, the small regions 212, 213, and 214 including the irradiation scheduled portion P1 and the overlapping portion P10 can be pre-heated at a high temperature. Therefore, before the powder bed 21B is pre-heated by the heater 42, the temperatures of the small regions 212, 213, and 214 of the powder bed 21B are raised in advance by the heat from the small regions 212, 213, and 214 of the powder bed 21A. Accordingly, when the powder bed 21B corresponding to the second shaped portion is pre-heated, the temperature of the irradiation scheduled portion P2 can be more reliably raised to a desired temperature. In other words, when the powder bed 21B corresponding to the second shaped portion is pre-heated, the irradiation scheduled portion P2 can be uniformly heated while maintaining the desired temperature.

### [Second Modification]

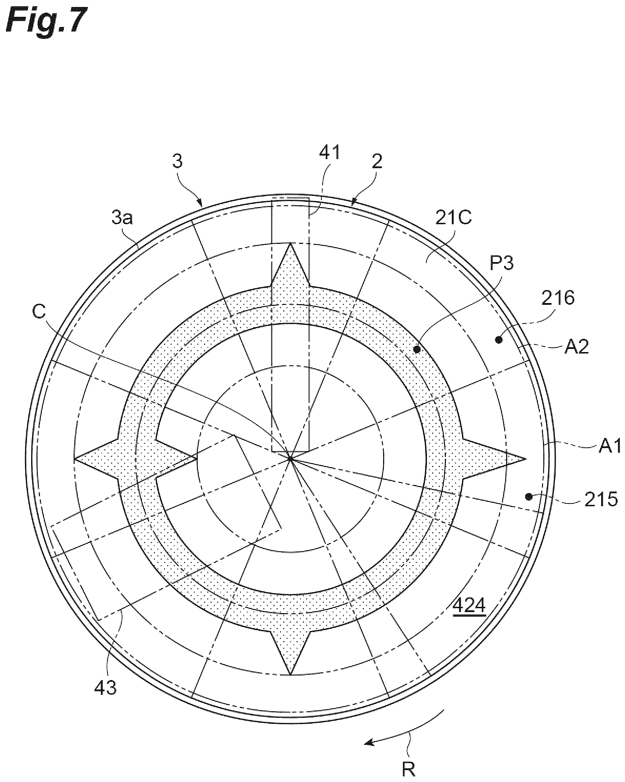

A second modification of the pre-heating processing of the powder bed by the shaping device 1 will be described with reference to FIG. 7. FIG. 7 illustrates a powder bed 21C formed on the main surface 3a of the table 3 and an irradiation scheduled portion P3 in the powder bed 21C. In the second modification, the region division unit 56 divides the powder bed 21 into a plurality of small regions not only in the radial direction of the circle centered on the rotation axis C but also in the rotation direction R. In the second modification, the plurality of small regions divided by the region division unit 56 include small regions 215 and 216. The small region 215 and the small region 216 are arranged in the rotation direction R. The small regions 215 and 216 are regions to be pre-heated by the same fourth divided heater 424. That is, the small regions 215 and 216 pass through the fourth pre-heating region 424A illustrated in FIG. 2.

In the second modification, the region setting unit 58 sets a small region including the irradiation scheduled portion P3 as a first region A1. Further, the region setting unit 58 sets a small region not including the irradiation scheduled portion P3 as a second region A2. At this time, the region setting unit 58 may specify the irradiation scheduled portion P3 based on slice data DS or divided data. The divided data is data generated by dividing the slice data DS in a circumferential direction (rotation direction R) about the rotation axis C of the table 3. That is, the divided data is generated as data for a fan-shaped region. A division angle of the divided data may be a constant angle. The division angle of the divided data may be, for example, an angle of 45° or less. As illustrated in FIG. 7, the small region 215 includes the irradiation scheduled portion P3. On the other hand, the small region 216 does not include the irradiation scheduled portion P3. Therefore, the region setting unit 58 sets the small region 215 as the first region A1. Further, the region setting unit 58 sets the small region 216 as the second region A2. The region setting unit 58 also sets each of other small regions as the first region A1 or the second region A2. The region setting unit 58 outputs, to the heater control unit 52, setting information indicating whether each small region has been set as the first region A1 or the second region A2.

The heater control unit 52 controls the heater 42 based on the setting information received from the region setting unit 58. Specifically, an output of the heater 42 is controlled such that the first region A1 and the second region A2 in the powder bed 21 are pre-heated at mutually different temperatures. In the second modification, similarly to the first embodiment, the heater control unit 52 controls the output of the heater 42 such that the first region A1 is pre-heated at a higher temperature than the second region A2. The heater control unit 52 may control the output of the heater 42 such that the first region A1 is pre-heated at a temperature equal to or higher than a pre-sintering temperature of the powder material 2. The heater control unit 52 may control the output of the heater 42 such that the second region A2 is pre-heated at a lower temperature than the pre-sintering temperature of the powder material 2.

In the second modification, like the small region 215 and the small region 216, a small region that has been set as the first region A1 and a small region that has been set as the second region A2 are arranged along the rotation direction R. These small regions may then be pre-heated by the same divided heater. For example, the small region 215 that has been set as the first region A1 and the small region 216 that has been set as the second region A2 are pre-heated by the same fourth divided heater 424. Therefore, in the second modification, the heater control unit 52 performs control to increase the output of the fourth divided heater 424 when the small region 215 is positioned in the fourth pre-heating region 424A of the fourth divided heater 424. Further, the heater control unit 52 performs control to lower the output of the fourth divided heater 424 when the small region 216 is positioned in the fourth pre-heating region 424A. The heater control unit 52 also performs control to vary the output of the corresponding divided heater at other locations where the first region A1 and the second region A2 are arranged along the rotation direction R. As described above, the heater control unit 52 according to the second modification varies the output of the heater 42 (each divided heater) while the table 3 makes one rotation. In other words, the heater control unit 52 varies the output of the heater 42 while the powder bed 21C corresponding to one piece of slice data DS is pre-heated.

The region division unit 56 of the shaping device 1 according to the second modification divides the powder bed 21 into the plurality of small regions 215 and 216 along the rotation direction R centered on the rotation axis C. According to this configuration, when a region to be irradiated with the electron beam and a region not to be irradiated with the electron beam are positioned side by side along the rotation direction R centered on the rotation axis C, for example, the region to be irradiated with the electron beam can be pre-heated at the temperature equal to or higher than the pre-sintering temperature of the powder material 2. In other words, the powder material 2 that configures the shaped object 2S can be pre-heated at a temperature equal to or higher than a pre-sintering temperature of the powder material 2. Furthermore, the region not to be irradiated with the electron beam can be pre-heated at a lower temperature than the pre-sintering temperature. In other words, the powder material 2 that does not configure the shaped object 2S can be pre-heated at the lower temperature than the pre-sintering temperature. Therefore, the powder material 2 that configures the shaped object 2S can be more reliably pre-heated. Furthermore, it is also possible to more reliably suppress generation of a pre-sintered body in the powder material 2 that does not configure the shaped object 2S.

The heater control unit 52 of the shaping device 1 according to the second modification varies the output of the heater 42 while the table makes one rotation. According to this configuration, when the first region A1 and the second region A2 are arranged in the rotation direction R about the rotation axis C, each of the first region A1 and the second region A2 can be pre-heated at a suitable temperature.

### [Second Embodiment]

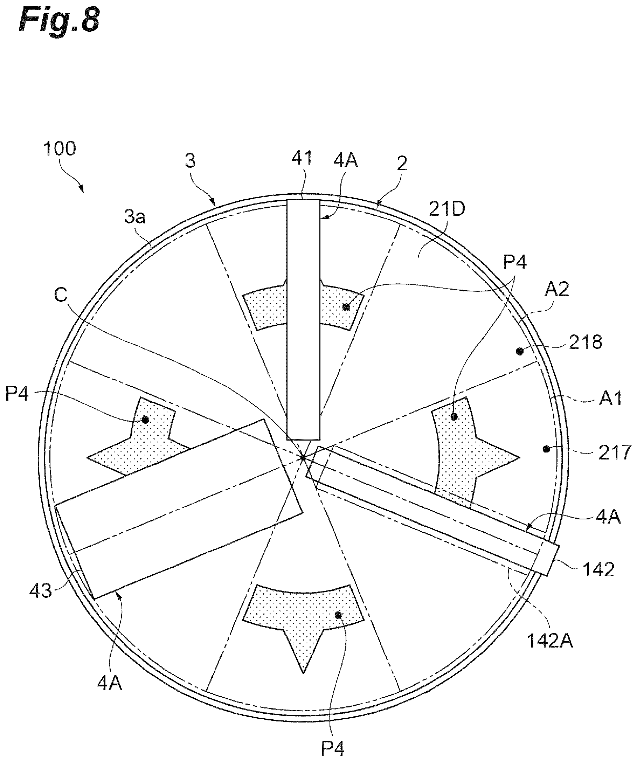

A shaping device 100 according to a second embodiment will be described with reference to FIG. 8. The shaping device 100 of the second embodiment includes a forming unit 4A. The forming unit 4A has a feeder 41, a heater 142, and a beam source 43. The feeder 41 and the beam source 43 of the second embodiment have the same configurations as those of the feeder 41 and the beam source 43 of the first embodiment. Therefore, a detailed description of the feeder 41 and the beam source 43 of the second embodiment will be omitted.

On the other hand, the heater 142 of the second embodiment has a configuration different from that of the heater 42 of the first embodiment. Specifically, the heater 142 does not have a plurality of divided heaters. Therefore, the entire heater 142 is heated with a uniform output. The heater 142 is one continuous heater extending along the radial direction of the circle centered on the rotation axis C. The heater control unit 52 can vary the output of the heater 142. Therefore, the heater control unit 52 can pre-heat each of a plurality of regions arranged in the rotation direction R in a powder bed 21D at different temperatures by varying the output of the heater 142.

FIG. 8 illustrates the powder bed 21D formed on the main surface 3a of the table 3 and irradiation scheduled portions P4 in the powder bed 21D. In the second embodiment, the region division unit 56 does not divide the powder bed 21D in the radial direction of the circle centered on the rotation axis C. The region division unit 56 divides the powder bed 21D into a plurality of small regions only in the rotation direction R. In the second embodiment, the plurality of small regions divided by the region division unit 56 include small regions 217 and 218. The small region 217 and the small region 218 are arranged in the rotation direction R. The small regions 217 and 218 are pre-heated by the same heater 142. That is, the small regions 217 and 218 pass through a pre-heating region 142A of the heater 142.

As in the first embodiment, the region setting unit 58 of the second embodiment sets small regions including the irradiation scheduled portion P4 as a first region A1. Further, the region setting unit 58 of the second embodiment sets small regions not including the irradiation scheduled portion P4 as a second region A2. As illustrated in FIG. 8, the small region 217 includes the irradiation scheduled portion P4. On the other hand, the small region 218 does not include the irradiation scheduled portion P4. Therefore, the region setting unit 58 sets the small region 217 as the first region A1. Further, the region setting unit 58 sets the small region 218 as the second region A2. The region setting unit 58 also sets each of other small regions as the first region A1 or the second region A2. The region setting unit 58 outputs, to the heater control unit 52, setting information indicating whether each small region has been set as the first region A1 or the second region A2.

The heater control unit 52 controls the heater 142 based on the setting information received from the region setting unit 58. Specifically, the heater control unit 52 controls the output of the heater 142 such that the first region A1 and the second region A2 in the powder bed 21D are pre-heated at mutually different temperatures. Similarly to the first embodiment, the heater control unit 52 of the second embodiment controls the output of the heater 142 such that the first region A1 is pre-heated at a higher temperature than the second region A2. The heater control unit 52 may control the output of the heater 142 such that the first region A1 is pre-heated at a temperature equal to or higher than a pre-sintering temperature of the powder material 2. The output of the heater 142 may be controlled such that the second region A2 is pre-heated at a lower temperature than the pre-sintering temperature of the powder material 2.

In the second embodiment, like the small region 217 and the small region 218, the small region that has been set as the first region A1 and the small region that has been set as the second region A2 are arranged along the rotation direction R. Therefore, the heater control unit 52 of the second embodiment performs control to increase the output of the heater 142 when the small region 217 is positioned in the pre-heating region 142A of the heater 142. The heater control unit 52 of the second embodiment performs control to lower the output of the heater 142 when the small region 218 is positioned in the pre-heating region 142A. The heater control unit 52 also performs control to appropriately vary the output of the heater 142 at other locations where the first region A1 and the second region A2 are arranged along the rotation direction R. As described above, the heater control unit 52 according to the second embodiment varies the output of the heater 142 while the table 3 makes one rotation. In other words, the heater control unit 52 varies the output of the heater 142 while the powder bed 21D corresponding to one piece of slice data DS is pre-heated.

Similarly to the shaping device 1 according to the first embodiment, the shaping device 100 according to the second embodiment can also pre-heat a region to be irradiated with the electron beam in the powder bed 21D at a high temperature. In other words, the powder material 2 that configures the shaped object 2S can be pre-heated at a high temperature. Furthermore, a region not to be irradiated with the electron beam can be pre-heated at a low temperature. In other words, the powder material 2 that does not configure the shaped object 2S can be pre-heated at a low temperature. Therefore, a pre-sintered body is less likely to be generated in the powder material 2 that does not configure the shaped object 2S, and a removal time of the pre-sintered body can be reduced. Therefore, according to the shaping device 100, shaping processing can be efficiently performed.

### [Third Embodiment]

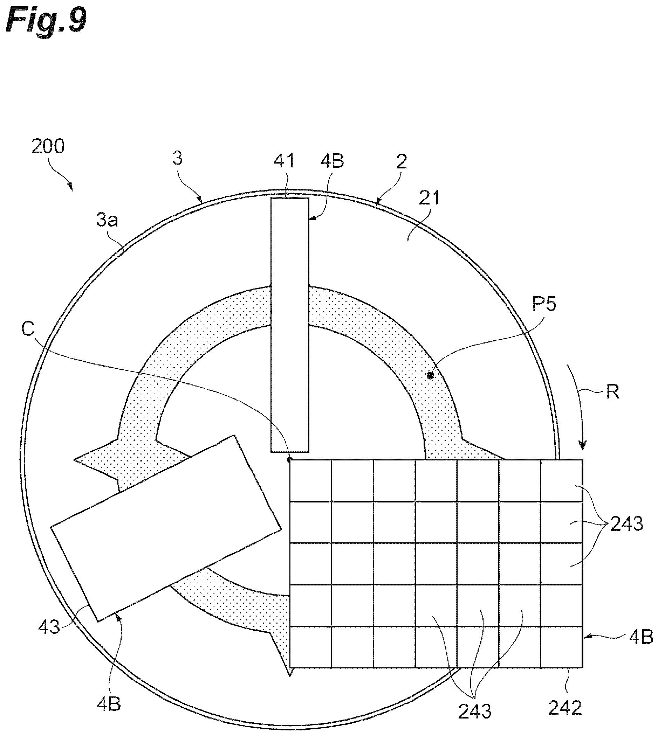

A shaping device 200 according to a third embodiment will be described with reference to FIG. 9. The shaping device 200 of the third embodiment includes a forming unit 4B. The forming unit 4B has a feeder 41, a heater 242, and a beam source 43. The feeder 41 and the beam source 43 of the third embodiment have the same configurations as the feeder 41 and the beam source 43 of the first embodiment. Therefore, a detailed description of the feeder 41 and the beam source 43 of the third embodiment will be omitted.

On the other hand, the heater 242 of the third embodiment has a configuration different from that of the heater 42 of the first embodiment. For example, the heater 242 has a rectangular shape when viewed from the direction along the rotation axis C. The heater 242 has a plurality of divided heaters 243 divided into a lattice shape. The plurality of divided heaters 243 are arranged along two directions orthogonal to each other.

The heater control unit 52 can independently control the divided heaters 243. That is, the heater control unit 52 can make the outputs of the divided heaters 243 different from each other. Therefore, the heater control unit 52 can pre-heat each of the plurality of regions in the powder bed 21 at different temperatures by controlling the outputs of divided heaters 243. That is, the heater control unit 52 can control the output of the heater 242 (divided heaters 243) such that the first region A1 and the second region A2 (see FIG. 4) in the powder bed 21 set by the region setting unit 58 are pre-heated at mutually different temperatures.

Similarly to the shaping device 1 according to the first embodiment, the shaping device 200 according to the third embodiment can also pre-heat a region to be irradiated with the electron beam at a high temperature. In other words, the powder material 2 that configures the shaped object 2S can be pre-heated at a high temperature. Furthermore, a region not to be irradiated with the electron beam in the powder bed 21 can be pre-heated at a low temperature. In other words, the powder material 2 that does not configure the shaped object 2S can be pre-heated at a low temperature. Therefore, a pre-sintered body is less likely to be generated in the powder material 2 that does not configure the shaped object 2S, and a removal time of the pre-sintered body can be reduced. Therefore, according to the shaping device 200, shaping processing can be efficiently performed.

The three-dimensional shaping device and the pre-heating device of the present disclosure have been described in detail above. However, the three-dimensional shaping device and the pre-heating device of the present disclosure are not limited to the above embodiments. The three-dimensional shaping device and the pre-heating device of the present disclosure can be variously modified without departing from the gist thereof.

For example, the heater control unit 52 may control the output of the heater 42 such that the first region A1 is pre-heated at a lower temperature than the second region A2. That is, the heater control unit 52 may set the output of the heater 42 (each divided heater) when pre-heating the first region A1 to be lower than the output of the heater 42 when pre-heating the second region A2.

The heater 42 may be any heater that can pre-heat each of the plurality of regions in the powder bed 21 at different temperatures. The shape and number of the heater 42 are not limited. The heater 42 may not be an infrared heater. Other heating means such as a gas heater may be used.

The region setting unit 58 may also set a small region that does not include the irradiation scheduled portion P in the powder bed 21 as the first region A1 in order to keep the shaped portion that has already been formed warm. In other words, a small region that is not to be irradiated with the electron beam may also be set as the first region A1. Furthermore, the heater control unit 52 may control the heater 42 such that the first region A1 is pre-heated at a higher temperature than the second region A2.

In each of the above-described embodiments, the configuration in which the table 3 rotates and is lifted and lowered has been described as an example. However, the table 3 may be fixed, and the forming unit 4 may rotate about the rotation axis C and may be lifted and lowered along the rotation axis C. That is, the table 3 may be rotated and lifted and lowered relative to the forming unit 4.

In the above embodiments, the powder material was sintered or melted by irradiation with an electron beam. However, the beam with which the powder material 2 is to be irradiated is not limited to the electron beam. That is, the beam with which the powder material is to be irradiated may be another energy beam. In other words, the beam used in the shaping device 1 may be an energy beam capable of supplying energy to the powder material 2. For example, it may be the shaping device 1 to which a laser melting method is applied. The beam used in the shaping device 1 may be a laser beam. The beam used in the shaping device 1 may be a charged particle beam, which is a concept including an electron beam and an ion beam.

The three-dimensional shaping device and the pre-heating device of the present disclosure will be described with reference to the following listed clauses. The three-dimensional shaping device and the pre-heating device of the present disclosure may include the following clauses in any combination without specific listing.
1. A three-dimensional shaping device including:
   a table having a main surface onto which a powder material is supplied;
   a forming unit disposed to face the main surface and configured to form a shaped object by laminating a plurality of shaped portions formed of the powder material; and
   a controller configured to control an operation of the forming unit, in which
   the table rotates relative to the forming unit in a predetermined rotation direction about a rotation axis,
   the forming unit has
   a supply unit configured to supply the powder material onto the main surface to form a powder bed,
   a pre-heating unit disposed downstream of the supply unit in the rotation direction and capable of pre-heating each of a plurality of regions in the powder bed at different temperatures, and
   an irradiation unit disposed downstream of the pre-heating unit in the rotation direction and configured to irradiate at least a part of the pre-heated powder bed with an energy beam, and
   the controller includes
   a region division unit configured to divide the powder bed into a plurality of small regions,
   a region setting unit configured to set a small region including an irradiation scheduled portion to be irradiated with the energy beam by the irradiation unit among the plurality of small regions as a first region, and set at least one small region among other small regions that have not been set as the first region as a second region, and
   a pre-heating control unit configured to control an output of the pre-heating unit such that the first region and the second region are pre-heated at mutually different temperatures.
2. The three-dimensional shaping device according to clause 1, in which the pre-heating control unit controls the output of the pre-heating unit such that the first region is pre-heated at a higher temperature than the second region.
3. The three-dimensional shaping device according to clause 1 or 2, in which the pre-heating control unit controls the output of the pre-heating unit such that the first region is pre-heated at a temperature equal to or higher than a pre-sintering temperature of the powder material and the second region is pre-heated at a lower temperature than the pre-sintering temperature.
4. The three-dimensional shaping device according to any one of clauses 1 to 3, in which the region division unit divides the powder bed into the plurality of small regions in a radial direction of a circle centered on the rotation axis.
5. The three-dimensional shaping device according to any one of clauses 1 to 4, in which the region division unit divides the powder bed into the plurality of small regions in the rotation direction centered on the rotation axis.
6. The three-dimensional shaping device according to any one of clauses 1 to 5, in which
   the pre-heating unit has a plurality of divided pre-heating units arranged in the radial direction of the circle centered on the rotation axis, and
   the pre-heating control unit maintains outputs of the divided pre-heating units constant while the table makes one rotation.
7. The three-dimensional shaping device according to any one of clauses 1 to 5, in which the pre-heating control unit varies the output of the pre-heating unit while the table makes one rotation.
8. The three-dimensional shaping device according to any one of clauses 1 to 7, in which
   the plurality of shaped portions include a first shaped portion and a second shaped portion formed on the first shaped portion, and
   the region setting unit sets, as the first region, a small region including a portion overlapping the irradiation scheduled portion of the powder bed corresponding to the second shaped portion among the plurality of small regions in the powder bed corresponding to the first shaped portion.
9. The three-dimensional shaping device according to any one of clauses 1 to 8, further including:
   a temperature detection unit configured to detect a temperature of the powder bed, in which
   the pre-heating control unit controls the output of the pre-heating unit based on a detection result by the temperature detection unit.
10. The three-dimensional shaping device according to any one of clauses 1 to 9, in which the pre-heating unit is disposed to face the main surface across the powder bed.
11. A pre-heating device that pre-heats a powder material that is sintered or melted by being irradiated with an energy beam to become a shaped object, the pre-heating device including:
   a pre-heating unit capable of pre-heating each of a plurality of regions in a powder bed formed of the powder material supplied onto a main surface of a table at different temperatures; and
   a controller configured to control an output of the pre-heating unit, in which
   the controller has
   a region division unit configured to divide the powder bed into a plurality of small regions,
   a region setting unit configured to set a small region including an irradiation scheduled portion to be irradiated with the energy beam among the plurality of small regions as a first region, and set at least one small region among other small regions that have not been set as the first region as a second region, and
   a pre-heating control unit configured to control the output of the pre-heating unit such that the first region and the second region are pre-heated at mutually different temperatures.

### Reference Signs List

1, 100, 200 Shaping device
2 Powder material
2S Shaped object
3 Table
3a, 3b Main surface
4, 4A, 4B Forming unit
5 Controller
6 Drive unit
7 Housing
8 Temperature detection unit
9 Pre-heating device
21, 21A, 21B, 21C, 21D Powder bed
31 Shaping tank
31a Wall portion
41 Feeder (supply unit)
41A Supply region
42, 142, 242 Heater (pre-heating unit)
42A, 142A Pre-heating region
43 Beam source (irradiation unit)
43A Irradiation region
51 Feeder control unit
52 Heater control unit
53 Beam control unit (pre-heating control unit)
54 Rotation control unit
55 Lifting and lowering control unit
56 Region division unit
57 Data acquisition unit
58 Region setting unit
61 Rotation unit
61a Shaft portion
62 Lifting and lowering unit
71 Window portion
71a Wall portion
211, 212, 213, 214, 215, 216, 217, 218 Small region
243 Divided heater
421 First divided heater (divided pre-heating unit)
421A First pre-heating region
422 Second divided heater (divided pre-heating unit)
422A Second pre-heating region
423 Third divided heater (divided pre-heating unit)
423A Third pre-heating region
424 Fourth divided heater (divided pre-heating unit)
424A Fourth pre-heating region
A1 First region
A2 Second region
C Rotation axis
DB Database
DS Slice data
DT Temperature data
P, P1, P2, P3, P4 Irradiation scheduled portion
P10 Overlapping portion
R Rotation direction
S Shaping space

## Claims

1. A three-dimensional shaping device comprising:
a table having a main surface onto which a powder material is supplied;
a forming unit disposed to face the main surface and configured to form a shaped object by laminating a plurality of shaped portions formed of the powder material; and
a controller configured to control an operation of the forming unit, wherein
the table rotates relative to the forming unit in a predetermined rotation direction about a rotation axis,
the forming unit has
a supply unit configured to supply the powder material onto the main surface to form a powder bed,
a pre-heating unit disposed downstream of the supply unit in the rotation direction and capable of pre-heating each of a plurality of regions in the powder bed at different temperatures, and
an irradiation unit disposed downstream of the pre-heating unit in the rotation direction and configured to irradiate at least a part of the pre-heated powder bed with an energy beam, and
the controller includes
a region division unit configured to divide the powder bed into a plurality of small regions,
a region setting unit configured to set a small region including an irradiation scheduled portion to be irradiated with the energy beam by the irradiation unit among the plurality of small regions as a first region, and set at least one small region among other small regions that have not been set as the first region as a second region, and
a pre-heating control unit configured to control an output of the pre-heating unit such that the first region and the second region are pre-heated at mutually different temperatures.

2. The three-dimensional shaping device according to claim 1, wherein the pre-heating control unit controls the output of the pre-heating unit such that the first region is pre-heated at a higher temperature than the second region.

3. The three-dimensional shaping device according to claim 1 or 2, wherein the pre-heating control unit controls the output of the pre-heating unit such that the first region is pre-heated at a temperature equal to or higher than a pre-sintering temperature of the powder material and the second region is pre-heated at a lower temperature than the pre-sintering temperature.

4. The three-dimensional shaping device according to claim 1 or 2, wherein the region division unit divides the powder bed into the plurality of small regions in a radial direction of a circle centered on the rotation axis.

5. The three-dimensional shaping device according to claim 1 or 2, wherein the region division unit divides the powder bed into the plurality of small regions in the rotation direction centered on the rotation axis.

6. The three-dimensional shaping device according to claim 1 or 2, wherein
the pre-heating unit has a plurality of divided pre-heating units arranged in a radial direction of a circle centered on the rotation axis, and
the pre-heating control unit maintains outputs of the divided pre-heating units constant while the table makes one rotation.

7. The three-dimensional shaping device according to claim 1 or 2, wherein the pre-heating control unit varies the output of the pre-heating unit while the table makes one rotation.

8. The three-dimensional shaping device according to claim 1 or 2, wherein
the plurality of shaped portions include a first shaped portion and a second shaped portion formed on the first shaped portion, and
the region setting unit sets, as the first region, a small region including a portion overlapping the irradiation scheduled portion of the powder bed corresponding to the second shaped portion among the plurality of small regions in the powder bed corresponding to the first shaped portion.

9. The three-dimensional shaping device according to claim 1 or 2, further comprising:
a temperature detection unit configured to detect a temperature of the powder bed, wherein
the pre-heating control unit controls the output of the pre-heating unit based on a detection result by the temperature detection unit.

10. The three-dimensional shaping device according to claim 1 or 2, wherein the pre-heating unit is disposed to face the main surface across the powder bed.

11. A pre-heating device that pre-heats a powder material that is sintered or melted by being irradiated with an energy beam to become a shaped object, the pre-heating device comprising:
a pre-heating unit capable of pre-heating each of a plurality of regions in a powder bed formed of the powder material supplied onto a main surface of a table at different temperatures; and
a controller configured to control an output of the pre-heating unit, wherein
the controller has
a region division unit configured to divide the powder bed into a plurality of small regions,
a region setting unit configured to set a small region including an irradiation scheduled portion to be irradiated with the energy beam among the plurality of small regions as a first region, and set at least one small region among other small regions that have not been set as the first region as a second region, and
a pre-heating control unit configured to control the output of the pre-heating unit such that the first region and the second region are pre-heated at mutually different temperatures.
